(19) Europäisches Patentamt / European Patent Office / Office européen des brevets

(11) **EP 4 653 909 A1**

(12) **EUROPEAN PATENT APPLICATION**

(43) Date of publication:
**26.11.2025 Bulletin 2025/48**

(21) Application number: **25176334.8**

(22) Date of filing: **14.05.2025**

(51) International Patent Classification (IPC):
**G01S 7/35** (2006.01)    **G01S 13/34** (2006.01)
**G01S 13/42** (2006.01)    **G01S 13/58** (2006.01)
**G01S 13/931** (2020.01)

(52) Cooperative Patent Classification (CPC):
**G01S 13/42; G01S 7/352; G01S 13/343;**
**G01S 13/584;** G01S 13/931

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.05.2024 US 202418669391**

(71) Applicant: NXP B.V.
**5656 AG Eindhoven (NL)**

(72) Inventors:
• SHI, Binbin
**5656AG Eindhoven (NL)**
• LI, Jun
**5656AG Eindhoven (NL)**
• WU, Ryan Haoyun
**5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **ANGLE OF ARRIVAL ESTIMATION FOR AUTOMOTIVE RADAR SYSTEM**

(57) A radar system includes, transmitters, receivers, and a controller that determines a measurement vector using signals received by the plurality of receiver modules, determines a steering vector matrix, and determines a plurality of supports using the measurement vector. The controller executes a regression algorithm to determine a weight vector that defines a relationship between the measurement vector and the steering vector matrix by defining a set of selected supports out of the plurality of supports, executes an exchange operation to determine an optimized set of selected supports by removing a first support from the set of selected supports and adding a second support to the set of selected supports, and calculates the weight vector using the optimized set of selected supports. The controller is configured to determine an estimated angle of arrival of a first object by correlating the steering vector matrix to the measurement vector using the weight vector.

FIG. 2

EP 4 653 909 A1

## Description

TECHNICAL FIELD

The present invention is directed in general to civil automotive radar systems and associated methods of operation. In one aspect, the present invention relates to an automotive radar system configured to perform angle of arrival estimation using a single best exchange iterative algorithm.

BACKGROUND

A radar system transmits an electromagnetic signal and receives back reflections of the transmitted signal. The time delay between the transmitted and received signals can be determined and used to calculate the distance and/or the speed of objects causing the reflections. For example, in civil automotive applications, such radar systems can be used to determine the distance and/or the speed of oncoming vehicles and other obstacles, such as pedestrians, roadway features (e.g., bridges, road signs), and the like.

Civil automotive radar systems enable the implementation of advanced driver-assistance system (ADAS) functions that are likely to enable increasingly safe driving and, eventually, fully autonomous driving platforms. As part of its operation, an automotive radar system determines an estimated angle of arrival (AoA) of nearby objects. That is, the angle at which the objects are approaching the vehicle, or vice versa. Using this information, a control system can take autonomous action to, in some instances, avoid collision with those objects, or provide other ADAS operations.

BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1A depicts a simplified schematic block diagram of an automotive radar system which includes a radar device connected to a radar controller processor.

FIG. 1B graphically depicts the processing steps that may be implemented by a processor to process digital signals received from the automotive radar system of FIG. 1A.

FIG. 2 is a flow chart depicting a flowchart for implementing the present Single Best Exchange algorithm for solving a linear regression problem to enable an estimate of AoA for objects associated with received radar signals.

FIGS. 3A-3F shows plots of radar signals amplitudes (vertical axis) versus angle (horizontal axis) for an example implementation of the present Single Best Exchange algorithm for radar signal processing.

DETAILED DESCRIPTION

The following detailed description is merely illustrative in nature and is not intended to limit the embodiments of the subject matter of the application and uses of such embodiments. As used herein, the words "exemplary" and "example" mean "serving as an example, instance, or illustration." Any implementation or embodiment described herein as exemplary, or an example is not necessarily to be construed as preferred or advantageous over other implementations. Furthermore, there is no intention to be bound by any expressed or implied theory presented in the preceding technical field, background, or the following detailed description.

In the context of the present disclosure, it will be appreciated that radar systems may be used as sensors in civil automotive radar sensors for road safety and vehicle control systems, such as advanced driver-assistance systems (ADAS) and autonomous driving (AD) systems.

As an example, automotive radar systems may be implemented as frequency modulated continuous wave (FMCW) radar systems that transmit frequency modulated signals (chirps) and receive their echoes as reflections from nearby objects. After down-mixing the received signals to a base band frequency, the resulting signal is composed of a number of sinusoidal waves, each one with a beat-frequency proportional to the range of a particular object. Within each sinusoid, an additional phase term carries Doppler-phase information for each object in the vicinity of the radar system. This Doppler-phase generally changes slowly and encodes information about the relative speed of the respective object.

FMCW radar signal processing attempts to identify both a range and Doppler component of received reflection signals for each nearby object that generates reflection signals (e.g., other automobiles, road signs). This processing involves arranging the sampled data values for received chirp signals in the form of several horizontal vectors arranged to form a range-Doppler matrix. The row length of the matrix is equivalent to the number of samples per chirp signals (usually a power of two, e.g., 1024 values), and the column length of the range-Doppler matrix is the number of chirps measured (usually also a power of two, e.g., 256, values). These two-dimensional matrices are generated for each receive antenna in the radar system. The several two-dimensional matrices for each receive antenna are arranged together in a three-dimensional matrix having dimensions sample number x chirp number x receive antenna and is referred to as a 'radar cube.'

Once the complete radar cube is available, further processing steps are executed to process the radar cube to identify potential objects and attributes (e.g., AoA and speed) of those objects. Such processing involves, initially, a Fast Fourier Transform (FFT) executed over the range dimension of the radar cube (referred to as the 'fast-time' FFT or 'R-FFT'), and an FFT executed over the Doppler dimension of the radar cube (referred to as the 'slow-time' FFT or 'D-FFT'). Peak detection methods are executed over the entire three-dimensional dataset containing the data processed through the fast-time and slow-time FFTs.

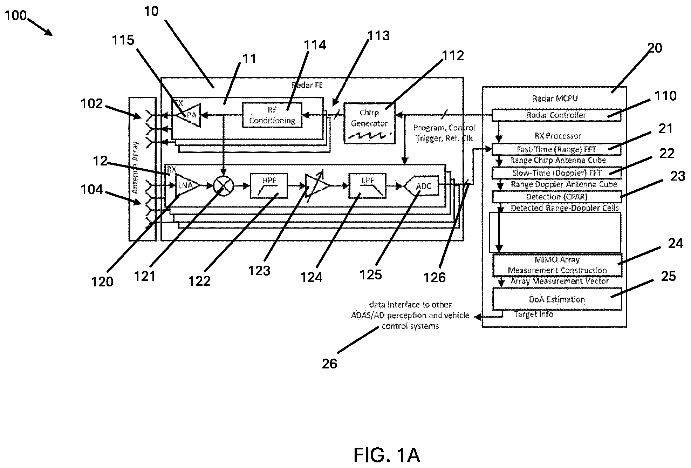

To illustrate the design and operation of a vehicle radar system, reference is now made to FIG. 1A which depicts a simplified schematic block diagram of an automotive radar system 100 signals processing system that includes a radar device 10 connected to a radar controller processor 20. In selected embodiments, the radar device 10 may be embodied as a line-replaceable unit (LRU) or modular component that is designed to be replaced quickly at an operating location. Similarly, the radar controller processor 20 may be embodied as a line-replaceable unit (LRU) or modular component. Although a single or mono-static radar device 10 is shown, it will be appreciated that additional distributed radar devices may be used to form a distributed or multi-static radar. In addition, the depicted radar system 100 may be implemented in integrated circuit form with the device 10 and the radar controller processor 20 formed with separate integrated circuits (chips) or with a single chip, depending on the application.

Within radar system 100 each radar device 10 includes one or more transmitting antenna elements 102 and receiving antenna elements 104 connected, respectively, to one or more radio frequency (RF) transmitter (TX) units 11 and receiver (RX) units 12. For example, each radar device (e.g., 10) is shown as including individual antenna elements 102, 104 (e.g., TX1,i, RX1,j) connected, respectively, to three transmitter modules (e.g., 11) and four receiver modules (e.g., 12), but these numbers are not limiting and other numbers are also possible, such as four transmitter modules 11 and six receiver modules 12, or a single transmitter module 11 and/or a single receiver module 12.

Each radar device 10 also includes a chirp generator 112 that is configured and connected to supply a chirp input signal to the transmitter modules 11. To this end, the chirp generator 112 is connected to receive a separate and independent local oscillator (LO) signal and a chirp start trigger signal. The operation of transmitter modules 11 may be controlled by a controller 110 that may be implemented, in whole or in part, by processor 20. Chirp signals 113 are generated and transmitted to transmitter modules 11, usually following a pre-defined transmission schedule, where the chirp signals 113 are filtered at the RF conditioning module 114 and amplified at the power amplifier 115 before being fed to the corresponding transmit antenna 102 (TX1,i) and radiated. By sequentially using each transmit antenna 102 to transmit successive pulses in the chirp signal 113, each transmitter module 11 operates in a time-multiplexed fashion in relation to other transmitter modules 11 to transmit radar signals in different transmit channels because they are programmed to transmit identical waveforms on a temporally separated schedule (i.e., in different transmit channels).

The radar signal transmitted by the transmitter antenna elements 102 (TX1,i, TX2,i) may by reflected by an object, and part of the reflected radar signal reaches the receiver antenna elements 104 (RX1,i) at the radar device 10. At each receiver module 12, the received (radio frequency) antenna signal is amplified by a low noise amplifier (LNA) 120 and then fed to a mixer 121 where the received signal is mixed with the transmitted chirp signal generated by the RF conditioning module 114. The resulting intermediate frequency signal is fed to a first highpass filter (HPF) 122. The resulting filtered signal is fed to a first variable gain amplifier 123 which amplifies the signal before feeding it to a first low pass filter (LPF) 124. This re-filtered signal is fed to an analog/digital converter (ADC) 125 and is output by each receiver module 12 as a digital signal 126 (D1). The receiver module compresses object echo signals of various delays into multiple sinusoidal tones whose frequencies correspond to the round-trip delay of the echo.

The radar system 100 also includes a radar controller processing unit 20 that is connected to supply input control signals to the radar device 10 (e.g., via controller 110) and to receive therefrom digital output signals (e.g., digital signal 126) generated by the receiver modules 12.

In selected embodiments, the radar controller processing unit 20 may be embodied as a micro-controller unit (MCU) or other processing unit that is configured and arranged for signal processing tasks such as, but not limited to, object identification, computation of object distance, object velocity, and object direction, and generating control signals. The radar controller processing unit 20 may, for example, be configured to generate calibration signals, receive data signals, receive sensor signals, generate frequency spectrum shaping signals (such as ramp generation in the case of FMCW radar) and/or register programming or state machine signals for RF (radio frequency) circuit enablement sequences. In addition, the radar controller processor 20 may be configured to program the transmitter modules 11 to operate in a time-division fashion by sequentially transmitting chirps for coordinated communication between the transmit antenna elements 102 TX1,i, RX1,j.

Radar controller processor 20 is configured to process digital signal 126 to ultimately identify a distance to objects as well as an angular position of those objects with respect to radar system 100. Digital signal 126 includes a sequence of digital values representing magnitudes of radar signals received by receiving antenna elements 104 captured over time. Typically, each digital value is associated with a particular chirp number and sample number.

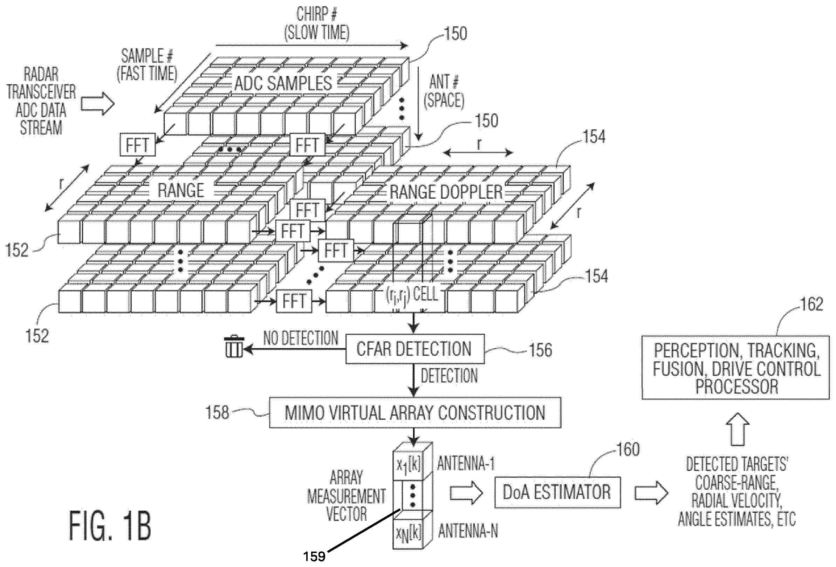

FIG. 1A shows the series of signal processing steps that are implemented by processor 20 in order to properly process digital signal 126 received from radar device 10 to identify potential nearby objects. To complement FIG. 1A, FIG. 1B graphically depicts, at a high-level, the processing steps that may be implemented by processor 20 to process digital signals 126.

The content of digital signals 126 is made up of a series of data frames that include a number of digital sample values (e.g., captured by ADCs 125 of receiver units 12) where the sample values are arranged in a two-dimensional matrix that is generated based upon a sequence of pulsed signals, as described above. The data structure making up a single captured frame is depicted by matrix 150 in FIG. 1B. As depicted, a single frames-worth of data in matrix 150 includes a two-dimensional matrix with a first dimension that is referred to as the "fast time" dimension and represents data values that were captured from the different pulsed signals. The second dimension of matrix 150 is referred to as the "slow time" dimension and represents data values that were captured in response to the different chirp signals that may be included within a particular pulsed signal that was transmitted by transmitter modules 11. As shown in FIG. 1B, signal processing may involve processing multiple frames of data represented by the several matrixes 150. Typically, during such signal processing, frames of data represented by a matrix 150 are captured for each receive channel. As such, FIG. 1B depicts multiple matrixes 150 that are each associated with a different receive channel and may be received as input data to the signal processing chain.

For subsections of radar cube data that may comprise all or portions of one or more of data represented by matrix 150, radar controller processor 20 initially performs a fast-time range Fast Fourier transform (FFT) 21 (FIG. 1A) to generate new frame data represented by matrix 152. The FFT 21 is executed on the 1-D arrays of data (i.e., the signal) associated with each distinct chirp in the original input matrix 150 to generate a 1-D transformed signal of the same length. The FFTs of each chirp in the original input frame represented by matrix 150 are combined to generate the transformed frame as indicated by matrix 152. This process is repeated for each frame associated with each receive channel. The resulting data frames, which represent range maps, are represented in FIG. 1B as matrixes 152 and can be used to determine distance to particular objects as reflected in the range maps.

In a next step, radar controller processor 20 performs an additional Fast Fourier Transform (FFT) 22 (FIG. 1A) (referred to as the slow-time or Doppler-FFT) on the range maps to generate a new range-Doppler frame data represented by matrixes 154. In this step, however, FFT 22 is applied along the opposite dimension from the FFT 21. As such, the FFT 22 is executed on the 1-D arrays of data (i.e., the signal) in matrixes 152 associated with each range bin in the matrix 152 to generate a transformed 1-D signal of the same length. The FFTs of each signal in the frames of matrixes 152 are combined to generate the range-Doppler data frames as indicated by matrixes 154. This process is repeated for each frame associated with each receive channel. The range-Doppler data frames associated with matrixes 154 provide information about the movement of a potential object over time from one sample number to the next. With the data frames associated with matrixes 154 generated, it is possible to process the data encoded therein to begin identifying potential objects and, in the case of a detected object, determine its velocity and direction of arrival.

Accordingly, the radar controller processor 20 performs constant false alarm rate (CFAR) object detection ( in step 23, FIG. 1A, step 156 (FIG. 1B).

If a potential object has been detected, radar controller processor 20 performs MIMO array measurement construction (in step 24, FIG. 1A). Array measurement vectors 159 are extracted from the reconstructed MIMO virtual array and provided to AoA estimation 158 block (FIG. 1B) that is configured to determine the AoA for each detected object (in step 25, FIG. 1A, step 160, FIG. 1B). The final object information, which may include an object identifier, its AoA, and other related information is then passed by radar controller processor 20 (in step 26, FIG. 1A, 162, FIG. 1B) to an ADAS or other system configured to utilize the object information to control one or more vehicle system.

In performing AoA estimation, due to different antenna array designs, array measurement vector 159 generally falls into one of two categories: uniform linear array (ULA) and sparse linear array (SLA). To achieve high angular resolution at relatively low cost, SLA antenna configurations are often used to increase the effective size of a radar system's radar aperture at the expense of increased AoA ambiguity in the form of spurious sidelobes or grating lobes in the solved angular spectrums.

To mitigate the spurious sidelobes, a sparsity constraint may be imposed upon the angular spectrum which results in AoA estimation requiring L-0 or L-1 Norm minimization problems. Known techniques such as Matching Pursuit (MP) and Orthogonal Matching Pursuit (OMP) may be used for resolving the sparse angular spectrum to perform AoA estimation. However, the performance of MP and OMP algorithms can be affected by the algorithms' sensitivity to antenna array geometry and support selection, sensitivity to angle quantitation, and the growing burden of least-squares (LS) computation in OMP as more objects are found. Both MP and OMP are referred to as forward algorithms because they start from an empty set and then add one support into the set at each iteration.

In the present disclosure an improved a Single Best Exchange (SBX) algorithm is proposed to efficiently and effectively estimate the Angle-of-arrive (AoA) of object as determined from a radar signal received by a typical FMCW automotive radar. In an improvement over conventional algorithms, which cannot be effectively used to solve automotive radar AoA estimation problems due to sparsity in the angular domain, the present SBX-based estimator provides an innovative exchange operation configured to resolve the noted deficiencies in conventional approaches. Specifically, as described herein, the present SBX estimator can provide more accurate object estimations and a lower number of spurious object identifications as compared to conventional approaches.

The present AoA estimator implements a novel exchange test (hence the name single best exchange (SBX), as used herein) as part of an iterative algorithm that performs both forward and backward operations (i.e., insertion and removal) effectively and efficiently on both ULA and SLA array geometry. Benefiting from the high sparsity characteristic, which is often observed in automotive radar AoA estimation, the present exchange test may have a relatively small computation overhead as compared to conventional SBR approaches.

Additionally, the present SBX algorithm is generally robust to the hyperparameter setting. Approaches for selecting the hyperparameter $\lambda$ are described herein. Besides that particular hyperparameter, the present SBX algorithm generally doesn't need to tune any other parameters such as a stop criterion (e.g., as required by OMP algorithms).

Because the present SBX algorithm is implemented as a straight-forward to implement sequential algorithm, the SBX algorithm can be easily adapted for specific improvements according to the requirements of a particular task, for example, finding two objects with high dynamic range, solving two-dimensional AoA estimation problems, and solving optimization problems with block/group sparsity. The present SBX algorithm can be utilized in conjunction with both ULA and SLA radar system array geometry.

In an automobile radar system, the array measurement vector $y$ (e.g., array measurement vector 159 of FIG. 1B) can be modeled as a product of an array steering matrix $\mathbf{A}$ and a spatial frequency vector $x$ plus white Gaussian noise $\varepsilon$, where each column of matrix $\mathbf{A}$ is a steering vector of the array steered to a spatial frequency ($f_1, f_2, ..., f_M$) in normalized units (e.g., between 0 and 1) upon which one desires to evaluate the amplitude of the object (see equations (1) and (2), below). To achieve relatively high angle resolution, a relatively large grid can be established by dividing up the $[0, 2\pi)$ radian spatial frequency spectrum into $M$ bins, which resulting in a "wide" $\mathbf{A}$ matrix (i.e., a matrix having a relatively large number of columns, which corresponds to the number of supports $M$, that is substantially greater (several times larger) than the number of rows, which corresponds to the number of array measurements $N$). Since $\mathbf{A}$ is a wide matrix, it implies the number of unknowns (i.e., vector $x$) is greater than the number of knowns (i.e., vector $y$) and the solving of equation $y = \mathbf{A}x + \varepsilon$ is an under-determined linear regression problem, defined below in equation (1), where $y$ and $\varepsilon$ (a noise factor) are $N \times 1$ vectors, $\mathbf{A}$ is $N \times M$ matrix, and $x$ is a $M \times 1$ vector. Because $x$ is assumed to be sparse, the under-determined linear system can be converted to a least squares problem in equation (2) with the number of non-zero elements to be no more than a specific number K, where $\|\mathbf{x}\|_0$ is the L-0 norm of $\mathbf{x}$.

$$y = \mathbf{A}x + \varepsilon = \begin{bmatrix} y_1 \\ \vdots \\ y_N \end{bmatrix} = \frac{1}{N} \begin{bmatrix} e^{j2\pi f_1 t_1} & e^{j2\pi f_2 t_1} & \dots & e^{j2\pi f_{M-1} t_1} & e^{j2\pi f_M t_1} \\ e^{j2\pi f_1 t_2} & e^{j2\pi f_2 t_2} & \dots & e^{j2\pi f_{M-1} t_2} & e^{j2\pi f_M t_2} \\ & & \vdots & & \\ e^{j2\pi f_1 t_N} & e^{j2\pi f_2 t_N} & \dots & e^{j2\pi f_{M-1} t_N} & e^{j2\pi f_M t_N} \end{bmatrix} \begin{bmatrix} x_1 \\ x_2 \\ \vdots \\ x_{M-1} \\ x_M \end{bmatrix} + \begin{bmatrix} \varepsilon_1 \\ \vdots \\ \varepsilon_N \end{bmatrix} \quad (1)$$

$$\hat{\mathbf{x}} = \operatorname{argmin}_{\mathbf{x} \in \mathbb{C}^M} = \|\mathbf{y} - \mathbf{A}\mathbf{x}\|^2 \text{ subject to } \|\mathbf{x}\|_0 \leq K \quad (2)$$

For forward greedy regression algorithms, e.g., matching pursuit (MP) and orthogonal matching pursuit (OMP), the next step in solving the linear regression problem is to identify a most probable support (i.e., non-zero element indices in vector $\mathbf{x}$) and measure that support's most probable amplitude. This support, once identified, is inserted into a set of selected, current, or "active" supports. That support's contribution from the array measurement vector is then cancelled to obtain a residual array measurement vector $r$. Based on the residual measurement vector, this iterative process repeats until all supports are identified or a stop criterion is met. The main difference among various types of forward greedy algorithms lies in how they identify the optimal support and measure that support's amplitude.

Another approach for solving the linear regression problem stated above is the use of forward-backward greedy algorithms, e.g., single best replacement (SBR). In such algorithms, an initial step in solving the regression provide is to make a decision to either insert a support into the selected support set or remove a support from it. The choice is driven by which action would result in a greater reduction of a predefined cost function. Following this decision, the selected support set is updated. This procedure is repeated until no further decisions can decrease the cost function at which time it can be determined that the algorithm has converged on a valid solution.

In the case of forward greedy regression algorithms, such as MP and OMP, the algorithms are generally incapable of removing a support from the set of selected vectors once the support has been identified and added to the set. Consequently, if the wrong support is selected in the initial iteration of the algorithm, the decision is generally irreversible in subsequent iterations of the algorithm leading to suboptimal results.

This drawback of forward-only algorithms led to the development of forward-backward algorithms, such as SBR, which not only allow support insertion but also allows support removal at each iteration step of the algorithm. It is NP-hard to find the exact solution to the sparse linear regression problem in (2). Instead, SBR algorithm approximates the sparse linear regression problem of equations (1) and (2) with a L-0 norm regularized linear regression problem which minimizes the cost function $\mathcal{J}_Q(\lambda)$ defined as:

$$\mathcal{J}_Q(\lambda) = \mathcal{E}_Q + \lambda \mathrm{Card}[Q] \tag{3}$$

In equation (3), $\varepsilon_Q$ is defined represents the least square error (LSE) with support set $Q$, $\lambda$ is the hyperparameter controlling the trade-off between the two terms in the equation (i.e., the data-fitting term and sparsity term), and the Card[$Q$] = $\|\mathbf{x}_Q\|_0$ is the cardinality of set $Q$. In SBR, the support set $Q$ that minimizes $\mathcal{J}_Q(\lambda)$ is the optimal support set.

In one approach for determining the value $\varepsilon_Q$, the LSE for all candidate supports can be computed to find the support that leads to the minimum LSE. However, this approach can be extremely computational expensive. As such, in many implementations, the determination of the value $\varepsilon_Q$ is simplified by building $Q$ sequentially by inserting or removing one support while computing the change of $\varepsilon_Q$ for the support set operation of at each step.

For the k-th iteration of the SBR algorithm, the best k-th support index $i_k$ is found by equations (4) and (5), below:

$$\arg\min_{i_k} \mathcal{E}_{Q_{k-1}\circ i_k} + \lambda \mathrm{Card}[Q_{k-1} \circ i_k] \tag{4}$$

$$\Leftrightarrow \arg\min_{i_k} \|\mathbf{y} - \mathbf{A}_{Q_{k-1}\circ i_k}\mathbf{x}_{Q_{k-1}\circ i_k}\|_2^2 + \lambda \mathrm{Card}[Q_{k-1} \circ i_k] \tag{5}$$

In equations (4) and (5), the symbol ∘ represents the set operation - either insertion or removal:

$$Q_{k-1} \circ i_k \triangleq \begin{cases} Q_{k-1} \cup \{i_k\} & \text{Insert } i_k \text{ into set } Q_{k-1} \\ Q_{k-1}\backslash\{i_k\} & \text{Remove } i_k \text{ from set } Q_{k-1} \end{cases} \tag{6}$$

The algorithm is iterated to continue inserting or removing supports into or from the set of selected supports until neither insertion nor removal further reduces $\mathcal{J}_Q(\lambda)$, and the algorithm is deemed to have converged and terminates. The amplitudes of the supports in the set of selected supports can be estimated by least square fitting once the SBR algorithm terminates.

In the present disclosure, a novel SBX algorithm is presented. In contrast to conventional approaches for solving the linear regression problem expressed in equations (1) and (2) via sparse-linear regression, above, in which candidate can only be added to (i.e., forward greedy algorithms) or added to or removed from (i.e., forward-backward algorithms) the set of selected supports being considered in the current iteration of the algorithms, the present SBX algorithm adds a new exchange operation which exchanges one support from the selected support set to an unselected support in one single operation. In SBX, the ∘ operationrepresents three support set operations, insertion, removal, and exchange, which is demonstrated below, in equation (7).

$$Q_{k-1} \circ i_k \triangleq \begin{cases} Q_{k-1} \cup \{i_k\} & \text{Insert } i_k \text{ into set } Q_{k-1} \\ Q_{k-1}\backslash\{i_k\} & \text{Remove } i_k \text{ from set } Q_{k-1} \\ Q_{k-1}\backslash\{i_k\} \cup \{m_k\} & \text{Exchange } i_k \text{ with } m_k, \text{ and } i_k \in Q_{k-1}, m_k \notin Q_{k-1} \end{cases} \tag{7}$$

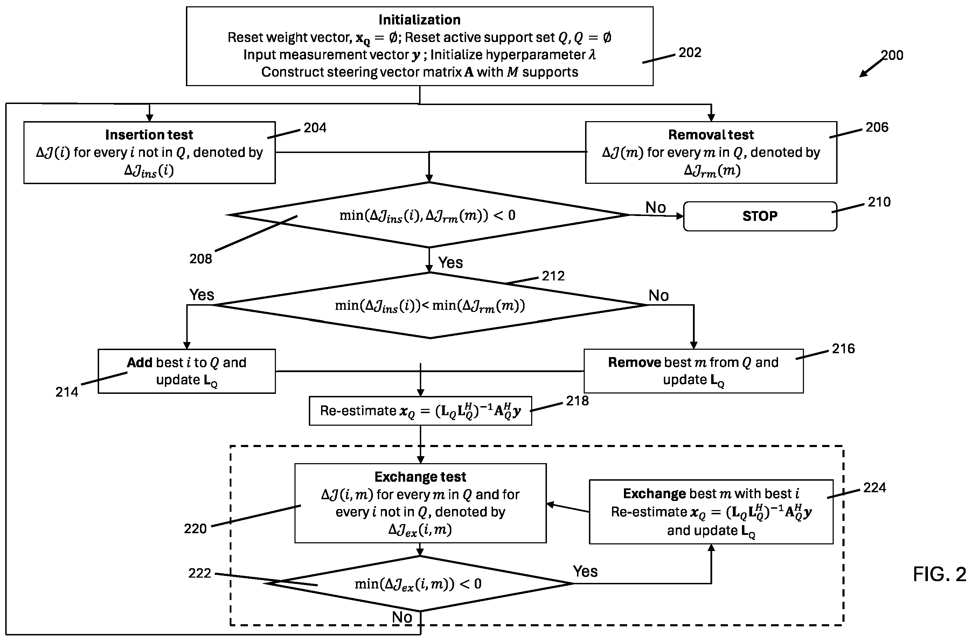

FIG. 2 is a flow chart depicting a flowchart for implementing the present SBX algorithm for solving a linear regression problem to enable an estimate of AoA for objects associated with received radar signals. Method 200 of FIG. 2 may be implemented by a radar controller of an automotive radar system to process received radar signals. For example, method 200 may be implemented by radar controller 110 of radar system 100 of FIG. 1A. In that case, method 200 may be implemented as part of or in conjunction with DOA estimation 25 step performed by controller 110.

Compare with SBR approaches, method 200 enables the objective function $\mathcal{J}_Q(\lambda)$ to be further minimized in each iteration of the algorithm by, instead of simply adding or removing a support, exchanging one particular selected support with another unselected column index. As described herein, this can lead to a more accurate AoA estimation with fewer spurs. In some cases, this capability of the SBX algorithm can further enable the algorithm to converge more quickly resulting in significant potential computing efficiencies.

With reference to FIG. 2, at block 202 an initialization step is performed in which the weight vector **x** (e.g., a spatial frequency vector) is set to a initial value such that $x_Q = \emptyset$ because SBX outputs $x_Q$ of the support set Q instead of a complete vector x. A selected support set Q is reset such that Q=∅. The input measurement vector **y** (e.g., array measurement vector 159 of FIG. 1B) is determined. Hyperparameter $\lambda$ is determined (approaches for determining the hyperparameter $\lambda$ are described below). A steering vector matrix **A** is constructed with M supports. M can be a parameter specified by a user. A larger value of M results in a finer grid that can lead to higher accuracy in AoA estimates, but can also increase memory and computation cost. In the initialization step, the matrix A is constructed from spatial frequencies and array pattern in equation (1). The cost function J()can be initialized to $\|y\|_2^2$, as described above.

After method 200 is initialized at block 202, the method executes blocks 204 and 206. As indicated by FIG. 2, blocks 204 and 206 may be executed in parallel, although there is no requirement that the blocks be executed at the time and may instead be executed serially or according to any other sequence.

At block 204 an insertion test is executed to identify the changes in the optimization cost function $\mathcal{J}$ () that would result from adding each of the unselected supports into the selected support set Q. That operation results in an array of delta values $\Delta\mathcal{J}_{ins}(i)$ that indicate the change in the value of optimization cost function $\mathcal{J}$ () if each unselected support I were to be individually added to the set Q.

In a similar manner, at block 206 a removal test is executed to identify the changes in the optimization cost function $\mathcal{J}$ () that would result from removing individual supports from the set Q. That operation results in an array of delta values $\Delta\mathcal{J}_{rem}(m)$ that indicate the change in the value of optimization cost function $\mathcal{J}$ () if each support m were to be individually removed from the set Q.

At the conclusion of blocks 204 and 206, therefore, method 200 has determined the effects of adding unselected supports to set Q and of removing supports from set Q on the optimization cost function $\mathcal{J}$ (). With that information, the radar controller performs some analysis of the resulting data sets $\Delta\mathcal{J}_{ins}(i)$ and $\Delta\mathcal{J}_{rm}(m)$.

Specifically, at block 208, the controller makes a determination as to whether the smallest delta value observed in any of the datasets $\Delta\mathcal{J}_{ins}(i)$ and $\Delta\mathcal{J}_{rm}(m)$ falls below 0. If not, that indicates that the algorithm has converged because none of the unselected supports can be added to the set Q to reduce the value of the optimization cost function $\mathcal{J}$ () and none of the selected supports in the set Q can be removed to reduce the value of the optimization cost function $\mathcal{J}$ (). Essentially, the set of supports Q is already optimized as much as possible. As such, if the smallest delta value observed in any of the datasets $\Delta\mathcal{J}_{ins}(i)$ and $\Delta\mathcal{J}_{rm}(m)$ does not fall be zero, that indicates method 200 has converged and the method can exit at block 210. The algorithm outputs the following values: the support set Q and the estimated complex amplitudes $x_Q$. Q is a set of selected column indices to A. In construction of the steering matrix A, a table relating column indices and AoAs is provided to enable the determination of AoAs for object given the Q.

If, however, at block 208 it is determined that the smallest delta value observed in any of the datasets $\Delta\mathcal{J}_{ins}(i)$ and $\Delta\mathcal{J}_{rm}(m)$ does fall below zero, that indicates the set Q can be optimized. At block 212, therefore, a determination is made as to whether the lowest delta value in the set of candidate insertions deltas $\Delta\mathcal{J}_{ins}(i)$ is smaller than the lowest delta value in the set of candidate removal deltas $\Delta\mathcal{J}_{rm}(m)$. If so, at block 214, the support i associated with the lowest value in the set $\Delta\mathcal{J}_{ins}(i)$ is added to the set Q. At that time, $\mathbf{L}_Q$ is updated to remove *i* from the set *Q*. If not, at block 216, the support m associated with the lowest value in the set $\Delta\mathcal{J}_{rm}(m)$ is removed from the set Q. At this time, $\mathbf{L}_Q$ is updated to insert *m* into the set *Q*.

At block 218, with the set Q modified by either block 214 or 216, the weight vector **x** is recalculated using the new set of supports Q according to the equation $x_Q = (\mathbf{L}_Q \mathbf{L}_Q^H)^{-1} \mathbf{A}_Q^H y$.

At this time potential support exchange subloop is performed as a loop defined by blocks 220, 222, and 224.

In an initial step of the support exchange subloop at block 220 an exchange test is implemented in which the value $\Delta\mathcal{J}$ (i,m) is determined for every support m in Q (as modified by block 214 or 216) and for every i not in Q (again, as modified by block 214 or 216), which are denoted $\Delta\mathcal{J}_{ex}$ (i,m). The dataset $\Delta\mathcal{J}_{ex}$ (i,m) represents all the delta values representing how the value of the optimization cost function $\mathcal{J}$ () would change if each support m that is currently in the set Q were to be exchanged for each support i that is not in the set Q. The dataset $\Delta\mathcal{J}_{ex}(i, m)$ includes values for each possible combination of supports in the set Q being exchange for supports that are not in Q.

At block 222, a determination is made as to whether any of the values in the dataset $\Delta\mathcal{J}_{ex}(i, m)$ are less than 0. If so, that indicates that a potential exchange of supports could operate to reduce the optimization cost function $\mathcal{J}$ () to improve the estimation. As such, at block 224 the exchange of supports (i.e., adding support i to set Q while removing support m from Q) that resulting in the lowest value in the dataset $\Delta\mathcal{J}_{ex}(i, m)$ is implemented and the weight vector **x** is recalculated using the new set of supports Q (i.e., determined after the support exchange of block 224) according to the

equation $\quad x_Q = (\mathbf{L}_Q \mathbf{L}_Q^H)^{-1} \mathbf{A}_Q^H y \quad$, where $\mathbf{L}_Q$ is the lower triangular matrix of the Cholesky decomposition result of

$$\mathbf{A}_Q^H \mathbf{A}_Q^{\square} : \mathbf{A}_Q^H \mathbf{A}_Q^{\square} = \mathbf{L}_Q^{\square} \mathbf{L}_Q^H.$$

In SBX,

$$\mathbf{L}_Q^{\square}$$

is computed iteratively: $\mathbf{L}_Q^{\square}$ is initialized to an empty matrix and updated through blocks 214, 206, 224. Method 200 then loops back to block 220 to evaluate other potential exchanges.

If, at block 222 it was determined that none of the values in the dataset $\Delta\mathcal{J}_{ex}(i,m)$ are less than 0, that indicates other support exchange will not improve the current set Q and the method return to blocks 204 and 206 to again evaluate potential support additions to and removal from set Q.

Table 1, below, depicts pseudocode for implementing the exchange loop of blocks 220, 222, and 224 shown in FIG. 2, via an exchange function that implements the exchange loop in blocks 220, 222 and 224. The exchange function further depends on two additional functions: update_L_ins, update_L_rm which are included in Table 1. cholupdate is a Matlab function that implements rank 1 update to Cholesky decomposition..

| **Function:** Exchange |
| --- |
| **Input**: <br> Current support set: $Q$ <br> Cholesky factor for current support set Q: $\mathbf{L}_Q \in \mathbb{C}^{|Q| \times |Q|}$ <br> Steering matrix: $\mathbf{A} \in \mathbb{C}^{N \times M}$ <br> Measurement vector: $\mathbf{y} \in \mathbb{C}^N$ <br><br> **Output**: <br> Updated support set: $Q'$ <br> Updated Cholesky factor: $\mathbf{L}_{Q'} \in \mathbb{C}^{|Q| \times |Q|}$ |
| **Initialization**: <br> $\Delta \mathcal{J}_{\text{best}} = 0$ <br> $Q' = Q$ <br> $\mathbf{L}_{Q'} = \mathbf{L}_Q$ |

| | |
| --- | --- |
| 1 | **while** $\Delta \mathcal{J}_{\text{best}} = 0$ **do** |
| 2 | $\mathbf{x}_{Q'} = (\mathbf{L}_{Q'}^{-1})^H \mathbf{L}_{Q'} \mathbf{A}_{Q'} \mathbf{y}$ |
| 3 | $\gamma_{Q'} = \text{diag}((\mathbf{L}_{Q'}^{-1})^H \mathbf{L}_{Q'}^{-1})$ |
| 4 | **for** $m \in Q'$ **do** |
| 5 | $\mathbf{L}_{Q' \backslash m} = \text{update\_L\_rm}(\mathbf{L}_{Q'}, m)$ |
| 6 | **for** $i = 1{:}M$ and $i \notin Q'$ **do** |
| 7 | $\mathbf{l}_{i \backslash m} = \mathbf{L}_{Q' \backslash m}^{-1} \mathbf{A}_{Q' \backslash m} \mathbf{a}_i$ |
| 8 | $\Delta \mathcal{J}_{\text{ex}}(m, i) = \dfrac{x_{Q',m}^2}{\gamma_{Q',m}} - \dfrac{\mathbf{l}_{i \backslash m} \mathbf{L}_{Q' \backslash m}^{-1} \mathbf{A}_{Q' \backslash m}^H \mathbf{y} - \mathbf{a}_i^H \mathbf{y})^2}{\|\mathbf{a}_i\|^2 - \|\mathbf{l}_{i \backslash m}\|^2}$ |
| 9 | $[n_{\text{best}}, i_{\text{best}}] = \text{argmin}_{n,i} \Delta \mathcal{J}_{\text{ex}}(n, i)$ |
| 10 | $\Delta \mathcal{J}_{\text{best}} = \min(\Delta \mathcal{J}_{\text{best}}, \Delta \mathcal{J}_{\text{ex}}(n_{\text{best}}, i_{\text{best}}))$ |
| 11 | **if** $\Delta \mathcal{J}_{\text{best}} < 0$ **then** |
| 12 | $Q' = Q' \backslash n_{\text{best}} \cup i_{\text{best}}$ |
| 13 | $\mathbf{L}_{Q'} = \text{update\_L\_ins}(\text{update\_L\_rm}(\mathbf{L}_{Q'}, n_{\text{best}}), \mathbf{a}_{i_{\text{best}}})$ |

Function update_L_ins (update the Cholesky factor $\mathbf{L}_Q$ after inserting a new support $i$)

| **Function:** update_L_ins |
| --- |
| **Input**: <br> Cholesky factor for current support set Q: $\mathbf{L}_Q \in \mathbb{C}^{|Q| \times |Q|}$ <br> Steering matrix of the current support set Q: $\mathbf{A}_Q \in \mathbb{C}^{N \times |Q|}$ <br> Steering vector to insert: $\mathbf{a}_i$ |

9

| **Output**: Updated Cholesky factor: $\mathbf{L}_{Q'} \in \mathbb{C}^{(|Q|+1)\times(|Q|+1)}$ | |
|---|---|
| 1 | $\mathbf{l}_i = \mathbf{L}_Q^{-1}\mathbf{A}_Q^H\mathbf{a}_i$ |
| 2 | $\mathbf{L}_{Q'} = \begin{bmatrix} \mathbf{L}_Q & \mathbf{0} \\ \mathbf{l}_i^H & \sqrt{\|\mathbf{a}_i\|^2 - \|\mathbf{l}_i\|^2} \end{bmatrix}$ |

Function update_L_rm (update the Cholesky factor $\mathbf{L}_Q$ after removing a support $i$)

| **Function:** update_L_rm | |
|---|---|
| **Input**: Cholesky factor for current support set Q: $\mathbf{L}_Q \in \mathbb{C}^{|Q|\times|Q|}$ <br> Support to remove: $i$ | |
| **Output**: Updated Cholesky factor: $\mathbf{L}_{Q'} \in \mathbb{C}^{(|Q|-1)\times(|Q|-1)}$ | |
| 1 | $\mathbf{l}_i = \mathbf{L}_Q^{-1}\mathbf{A}_Q^H\mathbf{a}_i$ |
| 2 | $\mathbf{F} = \mathbf{L}_Q((i+1):|Q|, (i+1):|Q|)$ |
| 3 | $\mathbf{e} = \mathbf{L}_Q((i+1):|Q|, i)$ |
| 4 | $\mathbf{X} = \text{cholupdate}(\mathbf{F}, \mathbf{e})$ |
| 5 | $\mathbf{L}_{Q'} = \begin{bmatrix} \mathbf{L}_Q(1:(i-1),1:(i-1)) & \mathbf{0} \\ \mathbf{L}_Q((i+1):|Q|,1:(i-1)) & \mathbf{X} \end{bmatrix}$ |

Table 1

In many automotive radar application, the linear regression problem described herein often calls for a highly sparse solution (e.g., only 2 or 4 objects). As a result, the hyperparameter $\lambda$ typically is large in order to generate the sparse solution. In those conditions, if only support insertion or removal is used (i.e., as in the case of SBR approaches), the algorithm will converge to a solution in which neither insertion nor removal can further minimize the optimization cost function $\mathcal{J}_Q(\lambda)$. However, research indicates there are many situations where the first least square error (LSE) term is still large when the SBR algorithm terminates with only insertion and removal capability, even though the solution may be further optimized. The reason why the solution found by the SBR algorithm cannot be further minimized is because even adding another low-amplitude support will increase $\mathcal{J}_Q(\lambda)$ by $\lambda$ which can be quite large.

Therefore, the exchange operation in the proposed SBX algorithm tries to maintain the second term unchanged while further minimizing the first term (i.e., the LSE term), where the first term is $\varepsilon_Q$ (LSE term or data-fitting term) of equation (6). The second term is $\lambda\text{Card}[Q]$ (L-0 norm regularization term or sparsity term) in equation (5). This is especially useful and effective when the selected support is shifting a little bit from the ground truth due to the interference among objects across the spectrum. This kind of interference is more severe when sparse linear array is used.

For real-time applications in a dynamic environment, such as those found in automotive radar applications, it may be preferable to implement the linear regression analysis in a manner that is insensitive to the hyperparameter $\lambda$ setting or that the parameter $\lambda$ be automatically tuned in some strategic way. The proposed SBX algorithm is, in essence, solving an optimization problem with an L-0 norm regularization term. Based on the recent developments in L-0 parameter setting, the optimal admissible range of the parameter $\lambda$ in SBX can be set between its lower bound and upper bound according to the following equation:

$$\frac{c_2(y)-c_3(y)}{2} \approx \lambda^- \leq \lambda \leq \lambda^+ \approx \frac{c_1(y)-c_2(y)}{2} \qquad (8)$$

In equation (8), $c_1(y)$ is the minimum least square error with single support, $c_2(y)$ is the least square error with ground truth (two supports), and $c_3(\boldsymbol{y})$ is the minimum least square error with one additional support added.

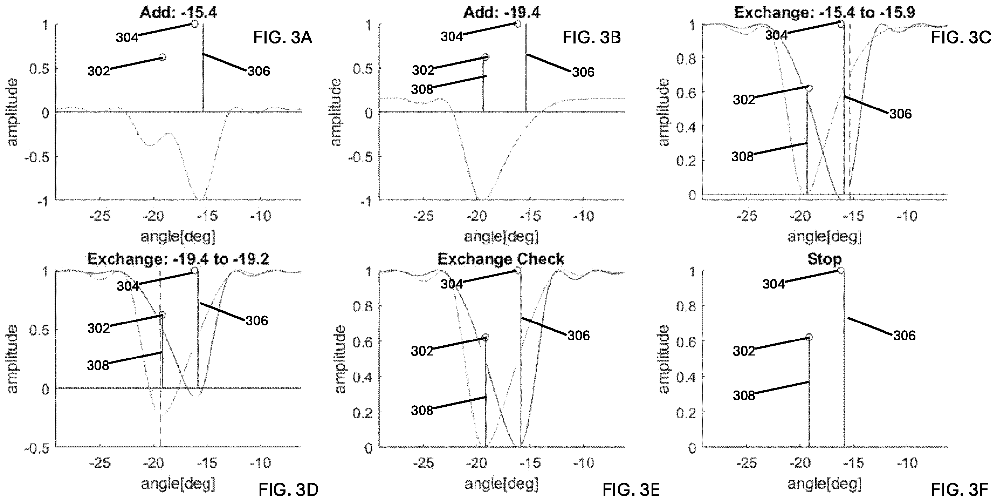

An example implementation of the present SBX algorithm is described below with reference to FIGS. 3A-3F. The example implementation was developed based on the 32-elements uniform linear array measurement simulations generated by a radar system configured as a 4-TX 8-RX MIMO radar system. The simulated measurement vector is processed according to method 200 of FIG. 2. FIGS. 3A-3F shows plots of radar signals amplitudes (vertical axis) versus angle (horizontal axis). In FIGS. 3A-3F, vertical lines represent the AoA and magnitude of the current supports. The circles indicate ground truth AoAs and magnitudes. The traces represent the change in the cost function J() for each unselected AoA for the current insert/removal/exchange operation.

In FIGS. 3A-3F, circles 302 and 304 in the figure indicate the objects' true AoA's (i.e., the ground truth), which are -19.2 degrees and -16.2 degrees, respectively, in this example. The estimated objects' AoA's using SBX are denoted by vertical lines 306, 308. The curves in the figure represent the $\mathcal{J}_Q(\lambda)$ variation when the corresponding support is added, removed, or exchanged. Because the prime objective of SBX is to minimize $\mathcal{J}_Q(\lambda)$, the estimated objects' AoA's usually align with the global minimums of the curves in FIGS. 3A-3F.

Upon initialization of the SBX algorithm, the selected support set Q is initialized by setting $Q = \emptyset$. In FIG. 3A, it can be observed the strongest object (as indicated by vertical line 306) is resolved at the first iteration but is not accurate according to ground truths 302, 304. This is due to the fact that the true peak position of this object is interfered with by the other object. Specifically, the sidelobes of one object interferes with the correct AoA determination for the other object. This kind of interference can become more severe if sparse linear array is used and more objects are present. In considering conventional algorithms (e.g., MP, OMP, OLS, and SBR) the resolution performance of such algorithms can be particularly sensitive to this kind of interference. That is why those prior art algorithms typically resolve one strong spur in the middle of the two objects or report sub-optimal results with several low-amplitude spurs.

With reference to FIG. 3B, it can be observed that the two objects are now resolved at the second iteration but still not perfectly accurate. Without an exchange operation, an SBR estimation algorithm would normally terminate here and converge to the SBR solution because neither inserting an extra support nor removing any of these two supports could further minimize $\mathcal{J}_Q(\lambda)$.

However, with the exchange operation described above with respect to method 200, in the present SBX algorithm, the estimation of the first object is updated to a more accurate support (i.e., closer to the true position) as shown in FIG. 3C. The selected support at -15.4 degree is removed and the support at -15.9 degree is inserted to Q which is closer to the ground truth -16.2 degree. In FIG. 3D, the AoA estimation of the other object is also updated by the exchange operation and leads to a better result. The final result, shown in FIG. 3F depicts a much more accurate outcome in the determined objects (identified by vertical lines 308 and 306) with respect to the ground truth objects (identified by circles 302 and 304). Compared with the result depicted in FIG. 3B (which depicts the result that would have been achieved by a conventional SBR algorithm), it can be seen that the present SBX algorithm provide superior estimation.

In some aspects, the techniques described herein relate to a radar system, including: a plurality of transmitter modules configured to transmit a plurality of transmitted radar signals; a plurality of receiver modules configured to receive reflections of the plurality of transmitted radar signals reflected by at least one object and to generate signals based on the received reflections; and a controller configured to: determine a measurement vector using signals received by the plurality of receiver modules, determine a steering vector matrix, determine a plurality of supports using the measurement vector, execute a regression algorithm to determine a weight vector that defines a relationship between the measurement vector and the steering vector matrix by: defining a set of selected supports out of the plurality of supports, executing an exchange operation to determine an optimized set of selected supports by removing a first support from the set of selected supports and adding a second support to the set of selected supports; and calculating the weight vector using the optimized set of selected supports, and determine an estimated angle of arrival of a first object by correlating the steering vector matrix to the measurement vector using the weight vector.

In some aspects, the techniques described herein relate to a radar system, wherein the regression algorithm is associated with an optimization problem, and a first value of the optimization problem calculated using the optimized set of selected supports is less than a second value of the optimization problem calculated using the set of selected supports.

In some aspects, the techniques described herein relate to a radar system, wherein, to execute the regression algorithm, the controller is configured to: execute an insertion test to determine a second set of selected supports by adding a third support into the optimized set of selected supports, and determine that a third value of an optimization problem calculated using the second set of selected supports is less than the second value of the optimization problem calculated using the set of selected supports.

In some aspects, the techniques described herein relate to a radar system, wherein the controller is configured to recalculate the weight vector using the second set of selected supports.

In some aspects, the techniques described herein relate to a radar system, wherein, to execute the regression algorithm, the controller is configured to: execute a removal test to determine a third set of selected supports by removing a fourth support from the set of selected supports, and determine whether a fourth value of the optimization problem calculated using the third set of selected supports is less than the second value of the optimization problem calculated using the set of selected supports.

In some aspects, the techniques described herein relate to a radar system, wherein the controller is configured to recalculate the weight vector using the third set of selected supports.

In some aspects, the techniques described herein relate to a radar system, wherein the steering vector matrix includes a plurality of spatial frequencies associated with an array pattern.

In some aspects, the techniques described herein relate to a radar system, wherein the relationship between the steering matrix and the measurement vector is of the form $y=Ax+\varepsilon,$ wherein y is the measurement vector, A is the steering vector matrix, $x$ is a spatial frequency vector, and $\varepsilon$ is a noise factor.

In some aspects, the techniques described herein relate to a radar system, including: at least one receiver module configured to receive radar signals; and a controller configured to: determine a measurement vector using the radar signals, determine a steering vector matrix, determine a plurality of supports using the measurement vector, execute a regression algorithm to determine a weight vector that defines a relationship between the measurement vector and the steering vector matrix by: defining a set of selected supports, wherein the set of selected supports includes a first subset of the plurality of supports, wherein a second subset of supports includes supports of the plurality of supports that are not in the first subset; executing an exchange operation to determine an optimized set of selected supports by removing a first support from the set of selected supports and adding a second support from the second subset into the optimized set of selected supports, wherein the regression algorithm is associated with an optimization problem, and a first value of the optimization problem calculated using the optimized set of selected supports is less than a second value of the optimization problem calculated using the set of selected supports; and calculating the weight vector using the optimized set of selected supports, and determine an estimated angle of arrival of a first object by correlating the steering vector matrix to the measurement vector using the weight vector.

In some aspects, the techniques described herein relate to a radar system, wherein, to execute the regression algorithm, the controller is configured to: execute an insertion test to determine a second set of selected supports by adding a third support from the second subset into the optimized set of selected supports, and determine that a third value of the optimization problem calculated using the second set of selected supports is less than the second value of the optimization problem calculated using the set of selected supports.

In some aspects, the techniques described herein relate to a radar system, wherein the controller is configured to recalculate the weight vector using the second set of selected supports.

In some aspects, the techniques described herein relate to a radar system, wherein, to execute the regression algorithm, the controller is configured to: execute a removal test to determine a third set of selected supports by removing a fourth support from the set of selected supports, and determine whether a fourth value of the optimization problem calculated using the third set of selected supports is less than the second value of the optimization problem calculated using the set of selected supports.

In some aspects, the techniques described herein relate to a radar system, wherein the controller is configured to recalculate the weight vector using the third set of selected supports.

In some aspects, the techniques described herein relate to a radar system, wherein the steering vector matrix includes a plurality of spatial frequencies associated with an array pattern.

In some aspects, the techniques described herein relate to a radar system, wherein the relationship between the steering matrix and the measurement vector is of the form $y=Ax+\varepsilon,$ wherein y is the measurement vector, A is the steering vector matrix, $x$ is a spatial frequency vector, and $\varepsilon$ is a noise factor.

In some aspects, the techniques described herein relate to a method, including: receiving radar signals using a radar system receiver module, determining a measurement vector using the radar signals, determining a steering vector matrix, determining a plurality of supports using the measurement vector, executing a regression algorithm to determine a weight vector that defines a relationship between the measurement vector and the steering vector matrix by: defining a set of selected supports, wherein the set of selected supports includes a first subset of the plurality of supports, wherein a second subset of supports includes supports of the plurality of supports that are not in the first subset; executing an exchange operation to determine an optimized set of selected supports by removing a first support from the set of selected supports and adding a second support from the second subset into the optimized set of selected supports, wherein the regression algorithm is associated with an optimization problem, and a first value of the optimization problem calculated using the optimized set of selected supports is less than a second value of the optimization problem calculated using the set of selected supports; and calculating the weight vector using the optimized set of selected supports, and determine an estimated angle of arrival of a first object by correlating the steering vector matrix to the measurement vector using the weight vector.

In some aspects, the techniques described herein relate to a method, further including: executing an insertion test to determine a second set of selected supports by adding a third support from the second subset into the optimized set of selected supports, and determining that a third value of the optimization problem calculated using the second set of selected supports is less than the second value of the optimization problem calculated using the set of selected supports.

In some aspects, the techniques described herein relate to a method, further including recalculating the weight vector using the second set of selected supports.

In some aspects, the techniques described herein relate to a method, further including: executing a removal test to determine a third set of selected supports by removing a fourth support from the set of selected supports, and determining whether a fourth value of the optimization problem calculated using the third set of selected supports is less than the second value of the optimization problem calculated using the set of selected supports.

In some aspects, the techniques described herein relate to a method, further including recalculating the weight vector using the third set of selected supports.

Although the examples have been described with reference to automotive radar systems, the systems and methods described herein may be implemented in conjunction with other types of radar systems. Devices or components described as being separate may be integrated in a single physical device. Also, the units and circuits may be suitably combined in one or more semiconductor devices. That is, the devices described herein may be implemented as a single integrated circuit, or as multiple integrated circuits.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or

physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents

**Claims**

1.  A radar system, comprising:

    a plurality of transmitter modules configured to transmit a plurality of transmitted radar signals;
    a plurality of receiver modules configured to receive reflections of the plurality of transmitted radar signals reflected by at least one object and to generate signals based on the received reflections; and
    a controller configured to:

    determine a measurement vector using signals received by the plurality of receiver modules,
    determine a steering vector matrix,

determine a plurality of supports using the measurement vector,
execute a regression algorithm to determine a weight vector that defines a relationship between the measurement vector and the steering vector matrix by:

defining a set of selected supports out of the plurality of supports,
executing an exchange operation to determine an optimized set of selected supports by removing a first support from the set of selected supports and adding a second support to the set of selected supports; and
calculating the weight vector using the optimized set of selected supports, and

determine an estimated angle of arrival of a first object by correlating the steering vector matrix to the measurement vector using the weight vector.

2. The radar system of claim 1, wherein the regression algorithm is associated with an optimization problem, and a first value of the optimization problem calculated using the optimized set of selected supports is less than a second value of the optimization problem calculated using the set of selected supports.

3. The radar system of claim 1 or 2, wherein, to execute the regression algorithm, the controller is configured to:

execute an insertion test to determine a second set of selected supports by adding a third support into the optimized set of selected supports, and
determine that a third value of an optimization problem calculated using the second set of selected supports is less than the second value of the optimization problem calculated using the set of selected supports.

4. The radar system of claim 3, wherein the controller is configured to recalculate the weight vector using the second set of selected supports.

5. The radar system of claim 3 or 4, wherein, to execute the regression algorithm, the controller is configured to:

execute a removal test to determine a third set of selected supports by removing a fourth support from the set of selected supports, and
determine whether a fourth value of the optimization problem calculated using the third set of selected supports is less than the second value of the optimization problem calculated using the set of selected supports.

6. The radar system of claim 5, wherein the controller is configured to recalculate the weight vector using the third set of selected supports.

7. The radar system of any preceding claim, wherein the steering vector matrix includes a plurality of spatial frequencies associated with an array pattern.

8. The radar system of any preceding claim, wherein the relationship between the steering matrix and the measurement vector is of the form $y=Ax+\varepsilon$, wherein $y$ is the measurement vector, $A$ is the steering vector matrix, $x$ is a spatial frequency vector, and $\varepsilon$ is a noise factor.

9. A method, comprising:

receiving radar signals using a radar system receiver module,
determining a measurement vector using the radar signals,
determining a steering vector matrix,
determining a plurality of supports using the measurement vector,
executing a regression algorithm to determine a weight vector that defines a relationship between the measurement vector and the steering vector matrix by:

defining a set of selected supports, wherein the set of selected supports includes a first subset of the plurality of supports, wherein a second subset of supports includes supports of the plurality of supports that are not in the first subset;
executing an exchange operation to determine an optimized set of selected supports by removing a first support from the set of selected supports and adding a second support from the second subset into the optimized set of selected supports, wherein the regression algorithm is associated with an optimization problem, and a first value of the optimization problem calculated using the optimized set of selected supports is less than a second value of the optimization problem calculated using the set of selected supports; and calculating the weight vector using the optimized set of selected supports, and

determine an estimated angle of arrival of a first object by correlating the steering vector matrix to the measurement vector using the weight vector.

**10.** The method of claim 9, further comprising:

executing an insertion test to determine a second set of selected supports by adding a third support from the second subset into the optimized set of selected supports, and
determining that a third value of the optimization problem calculated using the second set of selected supports is less than the second value of the optimization problem calculated using the set of selected supports.

**11.** The method of claim 10, further comprising recalculating the weight vector using the second set of selected supports.

**12.** The method of claim 10 or 11, further comprising:

executing a removal test to determine a third set of selected supports by removing a fourth support from the set of selected supports, and
determining whether a fourth value of the optimization problem calculated using the third set of selected supports is less than the second value of the optimization problem calculated using the set of selected supports.

**13.** The method of claim 12, further comprising recalculating the weight vector using the third set of selected supports.

FIG. 1A

FIG. 1B

EP 4 653 909 A1

**Initialization**
Reset weight vector, $\mathbf{x_Q} = \emptyset$; Reset active support set $Q, Q = \emptyset$
Input measurement vector $\boldsymbol{y}$ ; Initialize hyperparameter $\lambda$
Construct steering vector matrix $\mathbf{A}$ with $M$ supports — 202

200

**Insertion test** — 204
$\Delta \mathcal{J}(i)$ for every $i$ not in $Q$, denoted by
$\Delta \mathcal{J}_{ins}(i)$

**Removal test** — 206
$\Delta \mathcal{J}(m)$ for every $m$ in $Q$, denoted by
$\Delta \mathcal{J}_{rm}(m)$

$\min(\Delta \mathcal{J}_{ins}(i), \Delta \mathcal{J}_{rm}(m)) < 0$ — 208

No → **STOP** — 210

Yes

$\min(\Delta \mathcal{J}_{ins}(i)) < \min(\Delta \mathcal{J}_{rm}(m))$ — 212

Yes

No

**Add** best $i$ to $Q$ and
update $\mathbf{L_Q}$
214 —

**Remove** best $m$ from $Q$ and — 216
update $\mathbf{L_Q}$

Re-estimate $\boldsymbol{x}_Q = (\mathbf{L}_Q \mathbf{L}_Q^H)^{-1} \mathbf{A}_Q^H \boldsymbol{y}$ — 218

**Exchange test**
$\Delta \mathcal{J}(i, m)$ for every $m$ in $Q$ and for
every $i$ not in $Q$, denoted by
$\Delta \mathcal{J}_{ex}(i, m)$
220 —

**Exchange** best $m$ with best $i$ — 224
Re-estimate $\boldsymbol{x}_Q = (\mathbf{L}_Q \mathbf{L}_Q^H)^{-1} \mathbf{A}_Q^H \boldsymbol{y}$
and update $\mathbf{L_Q}$

222 — $\min(\Delta \mathcal{J}_{ex}(i, m)) < 0$

Yes

No

FIG. 2

FIG. 3A    FIG. 3B    FIG. 3C    FIG. 3D    FIG. 3E    FIG. 3F

EP 4 653 909 A1

Europäisches Patentamt

European Patent Office

Office européen des brevets

# EUROPEAN SEARCH REPORT

**Application Number**

EP 25 17 6334

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SINGH HIMALI ET AL: "Multi-Target Range and Angle Detection for MIMO-FMCW Radar with Limited Antennas", 2023 31ST EUROPEAN SIGNAL PROCESSING CONFERENCE (EUSIPCO), EURASIP, 4 September 2023 (2023-09-04), pages 725-729, XP034455959, DOI: 10.23919/EUSIPCO58844.2023.10289869 [retrieved on 2023-11-01] * abstract; figure 1 * * page 726, left-hand column, line 5 - page 727, right-hand column, line 53 * | 1-13 | INV. G01S7/35 G01S13/34 G01S13/42 G01S13/58 ADD. G01S13/931 |
| Y | CRESPO MARQUES ELAINE ET AL: "A Review of Sparse Recovery Algorithms", IEEE ACCESS, vol. 7, 7 January 2019 (2019-01-07), pages 1300-1322, XP011695921, DOI: 10.1109/ACCESS.2018.2886471 [retrieved on 2019-01-04] * page 1304, left-hand column, lines 14-25 * * page 1305, left-hand column, line 46 - right-hand column, line 9 * * page 1306, left-hand column, lines 1-18 * * page 1310, right-hand column, line 17 - page 1311, left-hand column, line 2 * * page 1311, right-hand column, lines 27-54 * | 1-13 | |
| X | US 2024/118404 A1 (KOPPELAAR ARIE GEERT CORNELIS [NL] ET AL) 11 April 2024 (2024-04-11) * abstract; figures 3, 5, 6 * * 0082-0086, 0097-0098, 0121, 132-0187 * | 1-13 | TECHNICAL FIELDS SEARCHED (IPC) G01S |

The present search report has been drawn up for all claims

| Place of search | Date of completion of the search | Examiner |
|---|---|---|
| Munich | 29 September 2025 | Rodríguez González |

EPO FORM 1503 03.82 (P4C01)

## ANNEX TO THE EUROPEAN SEARCH REPORT
## ON EUROPEAN PATENT APPLICATION NO.

EP 25 17 6334

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2025

| Patent document cited in search report | Publication date | Patent family member(s) | Publication date |
|---|---|---|---|
| US 2024118404 A1 | 11-04-2024 | CN 117783998 A | 29-03-2024 |
| | | EP 4345493 A1 | 03-04-2024 |
| | | US 2024118404 A1 | 11-04-2024 |

EPO FORM P0459

For more details about this annex : see Official Journal of the European Patent Office, No. 12/82